# EUROPEAN PATENT APPLICATION

(11) **EP 4 439 773 A1**
(43) Date of publication of application: **02.10.2024**
(21) Application number: 23164712.4
(22) Date of filing: 28.03.2023
(51) Int. Cl.: H01M 10/42, H01M 10/44

(54) **RECYCLING MODE FOR BMS**

(71) Applicant: Northvolt Systems AB, 112 47 Stockholm (SE)
(72) Inventor: Wiak, Chris, 113 56 Stockholm (SE); Nelson Landén, Simon, 118 55 Stockholm (SE); Slabbert, Clinton, 741 46 Knivsta (SE); Kolbach Hansen, Søren, 126 29 Hägersten (SE)
(74) Representative: Blidefalk, Jenny

(57) **Abstract**

Processes for discharging of batteries, battery cells and modules are provided, including processes for deep discharging of rechargeable battery cells having electric poles with contactors, said battery cells being present in one or more battery packs in a battery system managed by a battery management system (BMS), the processes comprising connecting the battery system to a power source;
activating a recycling mode in the BMS of the battery system, wherein the recycling mode allows the battery cells of the battery system to be discharged below undervoltage limits; and discharging the battery cells of the battery system. A battery system for performing the processes is also provided.

## Description

### Technical field

The present disclosure relates to processes for discharging of batteries, battery cells and modules, and systems thereof

### Background

Rechargeable or secondary batteries, including battery cells, battery modules and battery packs, find widespread use as electrical power supplies and energy storage systems. In particular in the transportation sector, to achieve the goal of the Intergovernmental Panel on Climate Change (IPCC) to limit global warming to 1.5°C, electric vehicles (EVs) powered by renewable energy have been tapped as the primary means to achieve decarbonization. As a result of the push from policymakers and global awareness, the number of electric vehicles bought and used worldwide will significantly increase in the next years and, as a consequence thereof, also the number of batteries at their end of life will significantly rise considering a typical life span of 10 years.

Batteries include toxic heavy metals and may release harmful gases with global warming potential if improperly disposed. Thus, recycling of batteries is imperative to meeting the IPCC goal. Furthermore, several of the elements used in EV batteries, such as lithium, cobalt, nickel, aluminum, copper and manganese, are valuable, in particularly considering the increasing demand for electric vehicles one the one side, and the scarcity of resources and the difficult mining conditions on the other side. Thus, saving resources, minimizing pollution and lowering costs are also driving factors for the recycling of batteries.

Current battery recycling processes follow a sequence of discharging and/or disassembly, hydro- or pyrometallurgy, metal extraction and product preparation. Hydrometallurgy, which is considered more environmentally friendly than pyrometallurgy, is preceded by crushing the batteries. For safety reasons, discharging of the batteries is crucial, because during the crushing process the anode and cathode materials could meet, thereby causing a short circuit or selfignition. If the voltage potential between the anode and cathode is high enough, it could cause thermal runaway, that is, rapid, uncontrolled release of the stored electrical energy, causing the cell to open explosively or to cause a fire.

Discharging methods for recycling typically involve dismantling a battery pack and discharging on a module level. Dismantling of a battery pack of high voltage may be challenging and also pose potential safety hazards. Thus, enhanced processes for discharging of batteries and battery systems are needed.

### Summary

An object of the present disclosure is to provide methods and devices which seek to mitigate, alleviate, or eliminate the above-identified deficiencies in the art and disadvantages singly or in any combination. This object is obtained by a process for deep discharging of rechargeable battery cells, said battery cells having electric poles with contactors and being present in one or more battery packs in a battery system managed by a battery management system, BMS, the process comprising: connecting (S1) the battery system to a power source; activating (S2) a recycling mode in the BMS of the battery system, wherein the recycling mode allows the battery cells of the battery system to be discharged below undervoltage limits; and discharging (S4) the battery cells of the battery system.

In another aspect is provided a battery system (100) managed by a battery management system, BMS, (10) the BMS comprising a recycling mode that allows battery cells (20) of the battery system to be discharged below undervoltage limits, the system being configured to perform the process above.

Other objects and advantages will become apparent to those skilled in the art from a review of the ensuing detailed description, which proceeds with reference to the following illustrative drawings, and the attendant claims. The steps of any process disclosed herein do not have to be performed in the exact order disclosed, unless explicitly stated.

### Brief description of the drawings

The above and other aspects of the present invention will now be described in more detail, with reference to the appended figures. The figures are not necessarily to scale, and generally only show parts that are necessary in order to elucidate the inventive concept, wherein other parts may be omitted or merely suggested.
Figure 1 illustrates a prior art battery system comprising a BMS connected to a module comprising cells of a battery pack for monitoring the status of the cells.
Figure 2 illustrates a battery system of the present disclosure comprising a BMS connected to a module comprising cells of a battery pack for monitoring the status of the cells, and optionally an external power source, where the BMS comprises a recycling mode.
Figure 3 is a flowchart of an exemplary process for activating a recycling mode of the BMS.

### Detailed description

The present disclosure relates to new and enhanced methods for discharging of rechargeable batteries, including battery packs and battery systems, which allows fast and effective processes, which are both simpler to use and safer for the personnel involved. This is realized by using the battery management system (BMS) for the deep discharging of battery cells/modules managed by said system.

Aspects of the present disclosure will be described more fully hereinafter with reference to the accompanying drawings. The methods disclosed herein can, however, be realized in many different forms and should not be construed as being limited to the aspects set forth herein. Like numbers in the drawings refer to like elements throughout. The features of various embodiments can be combined to form further exemplary aspects of the present disclosure that may not be explicitly described or illustrated. Further it is to be understood that the words and terms employed herein are used for describing specific embodiments only, and is not intended to be limiting, since the scope of the present invention is defined by the appended claims and equivalents thereof.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some aspects the non-limiting term "battery" or "batteries" is used, which is intended to include a battery cell or battery cells, a battery module or battery modules, which typically contain a plurality of battery cells, and a battery pack or battery packs, which typically contain a plurality of battery modules.

By the term "battery management system" or "BMS" is meant any electronic system that manages a rechargeable battery (e.g. a battery pack typically composed of a number of battery modules, each composed of a number of cells), and the battery/battery pack with the BMS may be referred to as a "battery system". Even though the BMS of the present disclosure is enabled with new functionality for deep discharging of the battery it manages, regular BMSs are well-known to the person skilled in the art.

The term "cell voltage" refers to the voltage of a battery/cell, which is determined by the chemical reactions in the battery, the concentrations of the battery components, and the polarization of the battery. The voltage calculated from equilibrium conditions is typically known as the nominal battery voltage. The cell voltage may also be referred to as the "operating voltage". The cell voltage or remaining cell voltage may be measured using any suitable method in the art.

The term "undervoltage" as in "undervoltage limit(s)" refers to a voltage or voltage limit/threshold that must not be subceeded by a battery or battery cell in normal operation. The undervoltage limits may typically be around 2,5-2,8 V at normal temperatures, depending on the battery properties and application. Undervoltage limits of specific batteries and applications at specific temperatures are well known in the art.

When a battery voltage drops below the undervoltage limit, it may be referred to as being at an undervoltage level. Undervoltage protection refers to protective measures in a battery system which prevents the battery from reaching undervoltage voltage levels while in operation. Regular undervoltage protection may continuously monitor the system voltage, and if the voltage level of a system goes out of its acceptable limits, the information provided by undervoltage protection can be used to initiate appropriate action to restore good operating conditions in the system. In most systems, the monitoring of voltage is carried out on the level of each individual cell, with the system preventing further discharge once a single cell has reached the low voltage threshold. Thus, the undervoltage protection is typically on cell-level and not system-level.

The Analog Front-End (AFE) is an Integrated Circuit (IC) in the BMS, which is designed to wrap all the analog circuitry required for the design and operation of a BMS system up into a small package. It contains inputs to measure the cell voltages of each cell position in the cell stack. The AFE can measure 3 to 15 series cells in a battery pack in a 0-5V range. The latest generation AFE currently used in the last generation of modules can go down to 11V on the supply.

The term "target cell voltage" or "target cell voltage threshold" refers to a threshold set for a discharging process, wherein the discharging process may be terminated once the battery or cell has reached the threshold, i.e. has a remaining cell voltage being the same as the target cell voltage threshold, or below, by e.g. removing discharge current, where the energy content of the battery cell should be reduced until the remaining cell voltage is at or below the desired cell voltage threshold.

In some embodiments, the AFE containing inputs to measure the cell voltages of each cell position in the cell stack is used. The threshold(s) are thus based on the AFE that is supplied directly from the cells. Thus, the minimum cell voltage depends on the number of cells that are in series on the module.

The regular standard technique for discharging a battery is electrically using static or dynamic resistance. This resistance is typically in the form of an electronic load which can be applied to a source to discharge it. The device consists of a resistor or a group of resistors, and an electronic control system. With this device, a constant current (CC), constant resistance (CR), constant voltage (CV) or constant power (CP) can be set to discharge the battery.

Many discharge processes for battery cells being recycled aim to discharge the batteries completely, referred to as "deep discharge", "destructive discharge" or full discharging, or nearly completely, to avoid thermal runaway when crushing the batteries. Thus, a bottleneck in the recycling process is the time and effort needed to discharge the cells prior to crushing, where the discharge process is continued typically until the cells are at, or close to, 0 V. The term "deep discharge" as used herein thus refers to such destructive discharge that is only performed when the battery is to be recycled/disposed of, and should not be confused with the discharge of a battery in use.

In the present disclosure the batteries/battery cells of a system is to be discharged below undervoltage limits, i.e. being deeply/destructively discharged, as a step in a recycling process. Discharging the batteries/cells to these low voltage levels harms or destroys the normal functionality of the batteries/cells, and should thus not be mistaken for the "normal" discharge proceeds of a battery in operation. Thus, the discharge processes of the present disclosure refer to deep discharge processes below undervoltage limits, which may be a step in a battery recycling process.

The current disclosure provides solutions to the above-mentioned problems and drawbacks by providing new processes enabling deep discharging of battery cells/modules in a battery system before dismantling the battery system, which are both faster and safer compared to prior processes. This is realized by providing new functionality in the BMS, enabling deep discharge as a step in a recycling process, before disassembly/dismantling the battery/battery system.

Battery cells in general comprise an anode, cathode, separator and electrolyte. The electrolyte acts as a conductor allowing ions to move between the positive electrode (cathode) and the negative electrode (anode) and in the reverse, in an oxidation and reduction reaction respectively. In lithium-ion secondary batteries (LIBs), lithium ions move from the anode to the cathode during discharge. The separator is meant to allow the transfer of ions but not to allow a short circuit between the anode and cathode. Furthermore, a battery cell typically comprises a casing for housing the electrodes and the electrolyte, current contactors/connectors or terminals and various safety devices, such as polymer gaskets, and one or more vents or valves for venting during thermal runaway. The positive terminal is connected to the cathode, e.g. by an aluminum tab, whereas the negative terminal is connected, e.g. by a copper tab, to the anode. The positive and negative terminals form the electric poles of the battery cell. The terms "electric pole" or "pole" and "terminal" or "connector" / "contactor" are used interchangeably herein.

Batteries in general are characterized by their capacity and operating voltage. The operating voltage of a battery cell is limited by the potential difference across the terminals of the battery when no current is being drawn, also known as the open circuit voltage (Voc/OCV). For safe operation, battery cells are typically limited to an operating voltage of 4.2 V. Over a given voltage, a cell can only deliver a specific amount of electric charge or current, this is known as the capacity (Q) of the battery which is measured in ampere hours (Ah). The capacity is limited by the electrode, particularly cathode materials.

Whether a battery cell is fully charged or not is monitored using the State of Charge (SOC). The SOC is defined as the available electric charge over the full capacity of the battery. At 100% SOC a battery cell is fully charged and has its full capacity. At 0% SOC, the cell has little charge left and can supply little current. 0% SOC typically means that about 2,5 - 2,8 V remains. Based on the SOC and type or size of a battery cell, the energy content of the battery cell may be derived.

A battery management system (BMS) is an electronic system that manages a rechargeable battery (which may include a number or modules/cells), such as by protecting the battery from operating outside its safe operating area, monitoring its state, calculating secondary data, reporting that data, controlling its environment, authenticating it and/or balancing it.

The minimum set of BMS components typically includes a control unit, a measurement unit, a charger and a battery. Even a simple device, like a power bank, needs a simple BMS, where it is possible to implement its functionality at the hardware level without any software development. A complex BMS on the other hand is typically controlled by operating software. Like any other embedded system, a complex BMS consists of hardware based on a microcontroller (MCU) and firmware. Multifunctional battery management systems require comprehensive BMS software development. For example, a control unit uses software to control BMS components' interaction and coordination. A measurement unit needs software to collect and transmit battery data. For a high-end BMS, automated testing software can be implemented. A BMS may measure physical parameters, such as voltage, temperature and current, directly, and a BMS with extended functionality may estimate battery states that depend on many factors, such as State-of-charge (SOC), State-of-health (SOH), State-of-energy (SOE), and State-of-power (SOP).

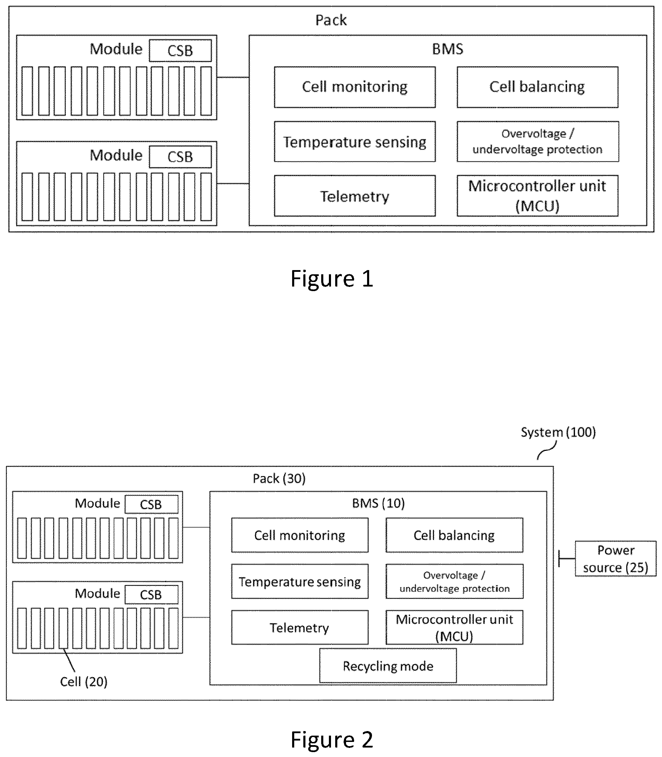

A generic prior art BMS is depicted in Figure 1. One or more battery pack(s) may be built together with a BMS, which may be referred to as a battery system herein. The BMS continuously monitors the cells in the pack. A BMS may monitor the state of the battery, which may include voltage (total voltage, voltages of individual cells, or voltage of periodic taps), temperature (average temperature, coolant intake temperature, coolant output temperature, or temperatures of individual cells), coolant flow (for air or liquid cooled batteries) and current (current in or out of the battery). The BMS may also calculate/compute values based on e.g. voltage (minimum and maximum cell voltage), state of charge or depth of discharge, to indicate the charge level of the battery, state of health, a variously-defined measurement of the remaining capacity of the battery as % of the original capacity, state of power, the amount of power available for a defined time interval given the current power usage, temperature and other conditions, state of safety (SOS), maximum charge current as a charge current limit (CCL), maximum discharge current as a discharge current limit (DCL), energy [kWh] delivered since last charge or charge cycle, Internal impedance of a cell (to determine open circuit voltage), charge [Ah] delivered or stored, total energy delivered since first use, total operating time since first use, total number of cycles, temperature monitoring and coolant flow for air or liquid cooled batteries. Thus, a regular BMS is an electronic system that manages a rechargeable battery to ensure it operates safely and efficiently. A BMS is designed to monitor the parameters associated with the battery pack and its individual cells, apply the collected data to eliminate safety risks and optimize the battery performance.

BMS topologies fall in three categories, centralized (a single controller is connected to the battery cells through a multitude of wires), distributed (a BMS board is installed at each cell, with just a single communication cable between the battery and a controller) or modular (a few controllers, each handling a certain number of cells, with communication between the controllers). The central controller of a BMS communicates internally with its hardware operating at a cell level, or externally with high level hardware such as a laptop. High level external communication may use different types of serial communications, CAN bus communications, or different types of wireless communications. A low voltage or centralized BMS may not have any internal communications. A distributed or modular BMS typically uses some low-level internal cell-controller (modular architecture) or controller-controller (distributed architecture) communication. For internal communication, isolated serial communications or wireless serial communications are typically used. BMS technology varies in complexity and performance, where a complete BMS also reports the state of the battery to a display, and protects the battery.

One main task performed by the BMS is to ensure safe operation of the battery it manages, to prevent it from damage. A BMS may protect its battery by preventing it from operating outside its safe operating area. The parameters that the BMS may monitor and ensure that they are within safety limits include fore example overcurrent (may be different in charging and discharging modes), overvoltage (during charging, especially important for lead-acid and Li-ion cells), undervoltage (during discharging), over-temperature, under-temperature, over-pressure (NiMH batteries), and ground fault or leakage current detection (system monitoring that the high voltage battery is electrically disconnected from any conductive object touchable to use like vehicle body). A BMS detecting that a battery operates outside of its safe operating area may first communicate a warning to the device/vehicle/operator of the device that safety limits have been breached, e.g., over CAN bus. The warning may request a device to which the battery is connected to reduce its use of the battery, or terminate using the battery. If the warning is ignored, the BMS may forcefully enter a safe state, e.g. by opening a set of relays, contactors or solid state devices, in order to disconnect the battery from the devices that are mis-using it.

In order to maximize the battery's capacity, and to prevent localized under-charging or over-charging, the BMS may actively ensure that all the cells that compose the battery are kept at the same voltage or state of charge, through balancing. The BMS can balance the cells by wasting energy from the most charged cells by connecting them to a load (such as through passive regulators), shuffling energy from the most charged cells to the least charged cells (balancers), and/or reducing the charging current to a sufficiently low level that will not damage fully charged cells, while less charged cells may continue to charge.

Electric vehicles run on rechargeable battery packs that are made of multiple cell modules arranged in a series and parallel. These battery packs produce several hundred volts of electricity, and various functions inside the car are dependent on them. That is why it becomes a critical component of the vehicle that requires constant monitoring and control. This requires BMS, an embedded system as described above, which monitors the components closer to the battery cell, as each cell needs to be closely monitored in order to ensure that it does not operate outside of its safe operating region. The BMS consists of different components that ensure that the battery runs efficiently without chances of possible failures.

Lithium-ion batteries that possess high charge density, power most electric vehicles/cars. These battery packs, even though are not very big, can be highly unstable. Therefore, under normal operation, these batteries should never be overcharged or be allowed to reach a state of deep discharge at any point, as this harms the battery, such as the operation and/or capacity of the battery. A damaged battery poses a risk for thermal runaway, where the current flowing through the battery on charging or overcharging causes the cell temperature to rise. Conditions like these can harm the lifespan or the capacity of the battery. To ensure this does not happen, the BMS monitors its voltage and current, including the many cells are put together to form a battery pack in an electric vehicle, where every cell needs to be individually monitored for its safety and efficient operation. Thus, typically under normal conditions, the BMS will raise a persistent flag indicating critical limits are reached which would prevent further usage of the batteries associated with the fault. Rechargeable batteries, such as the ones used in electric vehicles, that are to be recycled need to be deeply discharged before being crushed, where such discharging of the batteries is crucial for safety reasons. In electric vehicles, the contactors/ terminals are connected to the positive strap and the negative strap of the end cells, and are the interfacing point between the battery and the vehicle's electrical system. When a battery/battery system having a BMS is to be recycled, the battery is typically removed from its operating location (such as in a vehicle), shipped to a recycling facility, where the battery system may be disassembled by professional personnel, the BMS disconnected, and the contactors of the battery/ cells are closed manually, to deep discharge the battery for subsequent recycling.

Thus, the discharge is typically on a module level, and manual interaction with the battery to achieve the destructive deep discharge is needed. Thus, the present methods are manually labor intensive, pose potential hazards of handling a battery of high remaining voltage, and are a bottle neck in the recycling process as a whole.

The present disclosure relates to novel and enhanced processes for discharging battery cells for battery recovery, where the destructive deep discharge of the battery, i.e., discharging to undervoltage levels, or below undervoltage safety limits, is made before disassembly of the battery and/or disconnection of the BMS. As the present BMSs have safety protection measures which prevent the battery from being deeply discharged, this is not possible using these legacy BMSs. Accordingly, a new mode for the BMS is proposed, a recycling mode for the BMS, which in contrast to the normal operational "service mode", allows deep discharge of the battery system. Accordingly, the new recycling mode can be seen as disabling the undervoltage protection which is present in the normal BMS operating mode.

Thus, according to the methods of the present disclosure, a BMS managing a battery/battery system is equipped with a novel mode, a recycling mode, which, in contrast to the regular operational mode, enables deep discharge of the battery where the battery is discharged below undervoltage limits. This recycling mode is thus a "built-in" functionality of recycling mode enabled a BMS, and may be seen as an "on/off switch" or a "self-destruct" button, as entering the mode enables harm and potential destruction of the battery. Thus, the mode will only be entered once for a battery, at the end of its life.

To activate the recycling mode of the BMS (enter into the recycling mode), certain security measures need to be passed. It should be noted that due to these safety measures, accidentally entering into said recycling mode would not be possible. The switch from normal operating mode to recycling mode in the BMS will trigger the BMS to allow deep discharge of the battery cells in the battery system it manages.

When discharging a battery managed by a legacy BMS (i.e. not having the new functionality), the BMS is typically removed or disabled. Deep discharge is initiated by removing the lid of the battery, and adding clips and external resistance. This typically requires human intervention when the battery still has a high voltage, which may pose danger.

In the novel proposed methods, the battery may stay intact with the BMS, as the BMS itself will start the deep discharging of the battery. Hence, instead of manual intervention, the BMS is used for starting the deep discharging. Thus, the novel process is simpler, faster and more efficient (skipping an extra separate step), and less hazardous compared to legacy methods. The BMS will enable discharging of the battery cells of the battery it manages (the battery system) by closing the contactors in the battery system, which initiates the discharging. The discharge current may typically be controlled by an external power source (load), where the external load/system ensures a safe discharging process, where the BMS may indicate a maximum charge/discharge current to be used. The BMS will then allow the battery to be discharged below undervoltage limits. Compared to legacy deep discharging processes which are performed "externally", i.e., by external means, the present deep discharging of the battery is performed internally by the BMS itself. When the battery has been sufficiently discharged, i.e., when it has reached a target voltage threshold, it may be opened, and dismantled or crushed as in a normal recycling process. The BMS may monitor the voltage during discharging, and terminate the discharging once the target voltage, or target voltage threshold, has been reached.

An example of a battery system according to the present disclosure is depicted in Figure 2. As in the prior art, one or more battery pack(s) (30) comprising modules of cells (20) may be built together with a BMS (10), powered by an internal or external power source (load) (25), which may be referred to as a battery system (100) herein. The BMS may switch into recycling mode, which enables the power source to discharge the cells to undervoltage limits. It should be noted that this is a generic illustration of a battery system, and that the "modules" herein are not exhaustive but merely as illustrating examples, that these BMS "modules" are indicative of some operations carried out by the BMS.

Access to the recycling mode of the BMS will be access restricted for security reasons. To activate the recycling mode of the BMS, some security measures must be complied with. Accordingly, the BMS recycling mode will be a protected mode, which cannot be accessed accidentally, nor by unauthorized users. These security measures could comprise an operator key, which is needed to activate said mode, i.e., to switch the mode in the BMS from normal operational mode to recycling mode. Thus, a special access key on a service connector (e.g., ethernet) may be used. A cable may be connected to access the BMS interface.

The security measures may be any suitable security measures in the art. In some embodiments, the security may be software based. Software access control using access keys could be used for authorization and authentication, enabling access to the BMS recycling mode to entrusted users /authorized personnel. Software access/security keys or tokens could be used for accessing authorizing the user to access/activate the BMS recycling mode. In an example, an access password protected key may be used. In some embodiments, sandboxing of the software code may be used to further increase security.

Seed-key security may be used, i.e., a seed and key algorithm for an Engine Control Unit (EDC) is employed, where a seed, a short string of byte values, is supplied by the EDC, which seed is required to transform that seed into a key using a secret algorithm. If the obtained key matched with the key of the EDC, authorization is granted.

In some embodiments, a hardware security is implemented as security measures for enabling activation of the BMS recycling mode, separately or in combination with the software security measures. A hardware security module may be employed, i.e. a physical computing device that safeguards and manages digital keys, performs encryption and decryption functions for digital signatures and strong authentication. A hardware security key may be used, a physical device that you can use for authentication, such as a USB key that you plug in or an NFC key that you tap on an NFC reader. A hardware pin may be used, such as in a hardware PIN-secured USB flash drive. In some embodiments, a special service tool is needed for activation of the BMS service mode. In some embodiments, a physical switch, which may be switched from normal operational mode to the recycling mode, activates the recycling mode of the BMS.

The present discharge method for deep discharging of cells to be recycled may be employed before a following crushing and sorting step. After discharge, and eventual voltage validation and a washing step, the cells are crushed and sorted for further processing.

The cell voltage target is below undervoltage limits. In some embodiments, target or target threshold is far below undervoltage limits, such as below 1,5 V or less. In some embodiment, a complete discharge approaching 0 V is desired. Typically, the target threshold is 1,2 V, or less, such as 1,0 V, 0,8 V or 0,5 V, or less.

In some embodiments, the threshold(s) are based on the AFE that is supplied directly from the cells, and the minimum cell voltage depends on the number of cells that are in series on the module. The skilled person would be able to determine these for each respective number of cells used.

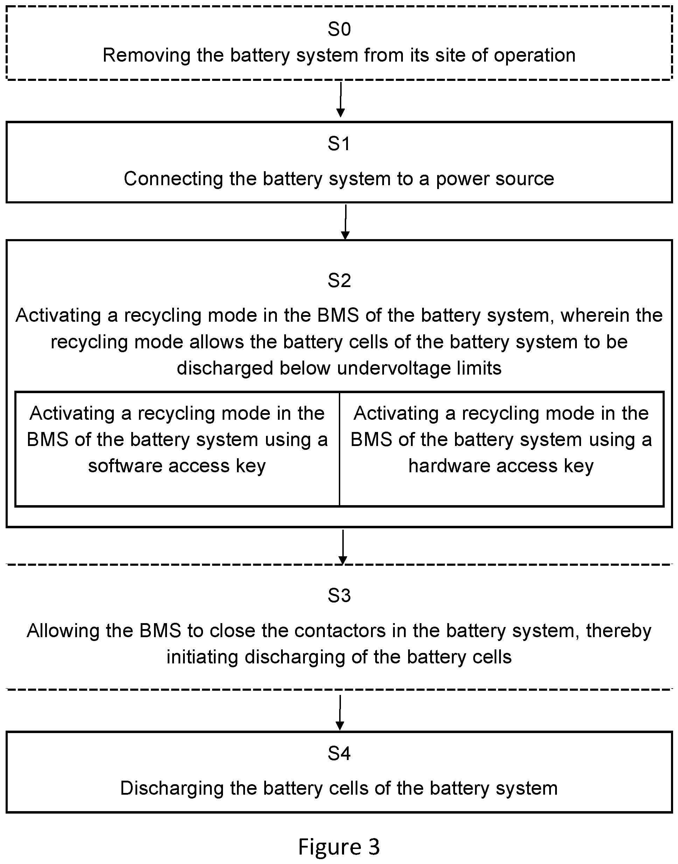

Thus, in the present disclosure is provided processes for deep discharging of rechargeable battery cells, said battery cells having electric poles with contactors and being present in one or more battery packs in a battery system managed by a battery management system, BMS, the processes comprising: connecting (S1) the battery system to a power source; activating (S2) a recycling mode in the BMS of the battery system, wherein the recycling mode allows the battery cells of the battery system to be discharged below undervoltage limits; and discharging (S4) the battery cells of the battery system. The process may further comprise allowing (S3) the BMS to close the contactors in the battery system, thereby initiating discharging of the battery cells. Allowing the contactors to close may be an active or a passive step, such as actively closing them, or removing an obstacle which makes them close. The process may further comprise an initial step of removing (S0) the battery system from its site of operation. The discharging (S4) of the battery cells of the battery system may comprise discharging (S4) of the battery cells of the battery system below undervoltage limits. Figure 3 is a flowchart illustrating this process, where some operations and modules are illustrated with a solid border and some operations and modules are illustrated with a dashed border. The operations and modules which are illustrated with solid border are operations which are comprised in the broadest example embodiment. The operations and modules which are illustrated with dashed border are example embodiments which may be comprised in, or a part of, or are further embodiments which may be taken in addition to the operations and modules of the broader example embodiments.

In some embodiments, activating (S2) the recycling mode in the BMS of the battery system comprises using a software access key. In some embodiments, activating (S2) the recycling mode using a software access key comprises: connecting (S21) an external computer to the system; sending (S22), from the external computer to the BMS, a request for a seed to unlock a security level; sending (S23), from the BMS to the external computer, the requested seed; computing (S24), in the external computer, an access key based on the requested seed; sending (S25), from the external computer to the BMS, the computed access key; determining (S26), in the BMS, the validity of the access key; and on condition that the access key is determined as valid, authorizing (S27) the external computer to access activation of the BMS recycling mode, whereafter a user of the external computer may activate the BMS recycling mode. This authorization may be sent to the external computer from the BMS. If the access key is not deemed valid, no access to the BMS recycling mode is given.

In some embodiments, activating (S2) the recycling mode in the BMS of the battery system comprises using a hardware access key. The hardware access key may take the form of i) a physical key, ii) an electronic key iii) a bridging member that creates an electrical connection between two ports in the BMS. These ports may refer to any externally available connections, they could be ports for wired connections to external computers, e.g., USB, ethernet, etc., they could also be ports specific for activating the recycling mode, such as the connectors to be closed. The use of a software and hardware key may also be combined. In some embodiments, activating (S2) the recycling mode in the BMS of the battery system comprises using a physical switch, which may be switched from normal operational mode to the recycling mode.

The processes may further comprise terminating (S5) the discharge when one or more battery cells have reached a target voltage threshold by disconnecting the battery system from the power source, crushing (S6) the one or more battery cells, wherein the crushing optionally is preceded by a disassembly of the battery system into smaller modules. In the processes of the present disclosure, the deep discharging of the rechargeable battery cells may comprise a destructive discharging of the rechargeable battery cells, such that the battery cells are destroyed and cannot be used further (recharged).

Further is disclosed a battery system (100) managed by a battery management system, BMS, (10) the BMS comprising a recycling mode that allows battery cells (20) of the battery system to be discharged below undervoltage limits, the system being configured to perform the processes described above and below.

### Example operations

### Example 1, activating BMS mode using software security measures

A battery and its BMS (forming a battery system) is removed from its site of operation in an electric vehicle. The system is connected to a power source (12 V) to power the BMS. It could be noted that the power source may be e.g., a Iv source (usually 12V or 24V), or could be from internal HV with a DC/DC, but most common is the use of an external power source. The recycling mode of the BMS is activated using a software access key, as follows.

An operator attaches an external computer, such as a standard laptop computer, that is configured to interface with the BMS software using an application protocol interface. In the present embodiment, the application protocol interface is Unified Diagnostic Services (UDS), but other application protocol interfaces may also be used. The connection may be made, for example, by connection to a physical diagnostics port on the battery, or by wireless transmission or other communication method. Once physically/wirelessly connected, the external computer communicates with the BMS by way of UDS in order to obtain access to the recycling mode.

In this example, the external computer sends a request to the BMS for a seed to unlock a specific security level. The security access may, for instance, be service 0x27 of the UDS protocol. The BMS then provides the seed, which is a random value that the external computer uses to compute a key to supply to the BMS in order to be granted access. Assuming the key is computed correctly, the BMS grants security access to the external computer.

Once access is granted, the authorized user can initiate a predefined control routine that places the battery into recycling mode. The predefined control routine can take any suitable form under the communication protocol being used. Such a method of managing electronic configurations is well-known in the automotive space and will be known to the skilled person.

As discussed above, the recycling mode of the BMS will act to remove the safeguards that would, in normal operating modes, prevent the battery from being placed in a state that would cause permanent damage to the operation of the battery, such as an undervoltage condition. Therefore, the recycling mode will allow the battery to be completely discharged and thus rendered non-operational and safe for further dismantling.

The fact that security access is required in order to perform the control routine ensures that accidental activation of the BMS recycling mode is impossible for normal users of the battery, i.e., the end user. This restricts access to authorized service personnel who will have the equipment required to obtain security access and the knowledge of the predefined control routine required to initiate the recycling mode.

In other embodiments, rather than using UDS, a custom service tool could be utilized that again runs on an external computing device but connects via CAN or ethernet. This service tool could have a protected mode that operates together with the hardware security engine (HSE) of the BMS microcontroller unit (MCU) in order to authenticate the application and strictly control access to various functionalities including the recycling mode. The HSE may therefore provide secure handling and configuration of authentication keys, along with on-the-fly encryption and decryption.

### Example 2, activating BMS mode using hardware security measures

A battery and its BMS (battery system) is removed from its site of operation in an electric vehicle. The system is connected to a power source (12 V) to power the BMS. The recycling mode of the BMS is activated using a hardware access key, as follows.

The hardware access key may take one of many forms, depending on the design of the battery. In one example, the hardware access key may comprise a literal key that is inserted into a keyhole in the BMS module or battery. Such a keyhole may only become accessible once the battery is removed from the site of operation. The turning of the key in the keyhole may activate a circuit in the BMS that automatically places the BMS into the recycling mode. Whilst a standard key physically turning a lock may be used, an electronic key, such as those typically used in modern vehicles, may also be used, to the same effect.

In other embodiments, the hardware access key may take the form of a bridging member, that creates an electrical connection between two ports in the BMS. The bridging member may be specially shaped such that only a specifically designed bridging member may be placed into the two ports. For example, the bridging member may include a set of depressions and/or protrusions that fit with corresponding protrusions and/or depressions on the battery that prevent an unauthorized bridging member from being connected and placing the BMS into the recycling mode. Of course, other methods of preventing the insertion of a physical part that would activate the recycling mode could also be utilized, and would be known to the skilled person.

### Example 3, activating BMS mode using a combination of hardware and software security measures

A battery and its BMS (battery system) is removed from its site of operation in an electric vehicle. The system is connected to a power source (12 V) to power the BMS. The recycling mode of the BMS is activated using a combination of hardware and software, as follows.

The BMS includes a connector for a chip, such as an IC chip socket. The activation of the recycling mode requires firstly that a chip is inserted, and secondly that the chip includes software stored thereon that first authenticates the chip using a security protocol, such as that discussed in relation to Example 1, and then carries out the control routine to initiate the BMS recycling mode. Thus, this example requires both the insertion of a physical component and then the initiation of a software routine.

In some examples, it may be desirable to provide an additional physical security measure such as requiring that the chip have a specific arrangement of legs or that it is a specific shape that can be received by the chip socket. This can provide an additional level of security.

### Example 4, activating BMS mode using a combination of hardware and software security measures

A battery and its BMS (battery system) is removed from its site of operation in an electric vehicle. The system is connected to a power source (12 V) to power the BMS. The recycling mode of the BMS is activated using a combination of hardware and software, as follows.

The battery includes a port connection that allows the connection of an external computer, as in Example 1. Once connected, the external computer can be authenticated, and the routines processed as described in this Example. In addition to this, the battery may include a further physical security level such as a barrier that is placed over the port such that it is not possible to attach the computer without first removing the physical barrier. This barrier may be secured using a physical key or code or other known security measure. This ensures that the port can only be accessed, and the recycling mode activated, if the operator has both physical access, granted by a key or code or similar, and electronic authorization obtained by use of the correct security and communication protocols.

In other examples, any of the hardware security measures of Example 2 may be combined with any software security measure, such as that described in Example 1.

## Claims

1. A process for deep discharging of rechargeable battery cells, said battery cells having electric poles with contactors and being present in one or more battery packs in a battery system managed by a battery management system, BMS, the process comprising:
connecting (S1) the battery system to a power source;
activating (S2) a recycling mode in the BMS of the battery system, wherein the recycling mode allows the battery cells of the battery system to be discharged below undervoltage limits; and
discharging (S4) the battery cells of the battery system.

2. The process according to claim 1, further comprising:
allowing (S3) the BMS to close the contactors in the battery system, thereby initiating discharging of the battery cells.

3. The process according to claims 1-2, wherein discharging (S4) the battery cells of the battery system comprises discharging (S4) the battery cells of the battery system below undervoltage limits.

4. The process according to claims 1-3, wherein activating (S2) the recycling mode in the BMS of the battery system comprises using a software access key.

5. The process according to claim 4, wherein activating (S2) the recycling mode using a software access key comprises:
connecting (S21) an external computer to the system;
sending (S22), from the external computer to the BMS, a request for a seed to unlock a security level;
sending (S23), from the BMS to the external computer, the requested seed;
computing (S24), in the external computer, an access key based on the requested seed;
sending (S25), from the external computer to the BMS, the computed access key;
determining (S26), in the BMS, the validity of the access key; and
on condition that the access key is determined as valid,
authorizing (S27) the external computer to access activation of the BMS recycling mode.

6. The process according to claims 1-5, wherein activating (S2) the recycling mode in the BMS of the battery system comprises using a hardware access key.

7. The process according to claim 6, wherein the hardware access key may take the form of i) a physical key, ii) an electronic key iii) a bridging member that creates an electrical connection between two ports in the BMS.

8. The process according to claims 1-3, and 6-7, wherein activating (S2) the recycling mode in the BMS of the battery system comprises using a physical switch, which may be switched from normal operational mode to the recycling mode.

9. The process according to any one or the preceding claims, further comprising:
terminating (S5) the discharge when one or more battery cells have reached a target voltage threshold by disconnecting the battery system from the power source.

10. The process according to any one or the preceding claims, further comprising:
crushing (S6) the one or more battery cells, wherein the crushing optionally is preceded by a disassembly of the battery system into smaller modules.

11. The process according to any one or the preceding claims, further comprising:
removing (S0) the battery system from its site of operation.

12. The process according to any one or the preceding claims, wherein the deep discharging of the rechargeable battery cells comprise a destructive discharging of the rechargeable battery cells.

13. A battery system (100) managed by a battery management system, BMS, (10) the BMS comprising a recycling mode that allows battery cells (20) of the battery system to be discharged below undervoltage limits, the system being configured to perform the process of any of claims 1-12.
